(19) Europäisches Patentamt / European Patent Office / Office européen des brevets

(11) **EP 2 015 295 A1**

(12) **EUROPEAN PATENT APPLICATION**

(43) Date of publication:
**14.01.2009 Bulletin 2009/03**

(51) Int Cl.:
*G11B 7/0065* (2006.01)  *G11B 7/135* (2006.01)

(21) Application number: **08012425.8**

(22) Date of filing: **09.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **10.07.2007 JP 2007180470**

(71) Applicant: **Sharp Kabushiki Kaisha**
**Osaka-shi, Osaka 545-8522 (JP)**

(72) Inventors:
• **Kobayashi, Akiko**
  **Tenri-shi, Nara 632-0018 (JP)**
• **Nakamura, Atsushi**
  **Nara-shi**
  **Nara 631-003 (JP)**

(74) Representative: **Müller - Hoffmann & Partner Patentanwälte**
**Innere Wiener Strasse 17**
**81667 München (DE)**

(54) **Hologram element, hologram element fabricating apparatus, hologram element fabricating method, and hologram reconstructing apparatus used for reconstructing information**

(57)   A reference beam (RL) is deflected by an angularly rotating mirror (25), and applied to a hologram recording medium (30) at a set incident angle. The relevant applied reference beam (RL) and a signal beam (SL) are superposed within the hologram recording medium (30), and light intensity distribution of the resultant interference fringes is recorded as a hologram. The reference beam (RL) incident on the hologram recording medium (30) is partially transmitted through the hologram recording medium (30). The relevant transmitted reference beam (RL) passes through a quarter wave plate (41) to be incident on a hologram element (40). The relevant incident reference beam (RL) has its traveling direction changed into a reverse direction by the hologram element (40) regardless of its incident angle, follows the same optical path as the incoming path, and is applied again to the hologram recording medium (30).

FIG.1

## Description

This nonprovisional application is based on Japanese Patent Application No. 2007-180470 filed on July 10, 2007 with the Japan Patent Office, the entire contents of which are hereby incorporated by reference.

BACKGROUND OF THE INVENTION

Field of the Invention

The present invention relates to a hologram element, a hologram element fabricating apparatus, a hologram element fabricating method, and a hologram reconstructing apparatus, and particularly relates to a hologram element, a hologram element fabricating apparatus, a hologram element fabricating method, and a hologram reconstructing apparatus used for reconstructing information recorded in an angular multiplexing scheme.

Description of the Background Art

In recent years, there has been proposed a hologram recording/reconstructing apparatus that records and/or reconstructs a large volume of data by utilizing a hologram technology. Such an apparatus is specifically described in, for example, Japanese Patent Laying-Open No. 2006-317886 and Ian Redmond, The InPhase Professional Archive Drive OMA: Design and Function, Optical Data Storage Topical Meeting 2006 (ODS 2006), Technical Digest (an invited lecture). Such a hologram recording/reconstructing apparatus adopts a technique of multiplex recording to improve recording density.

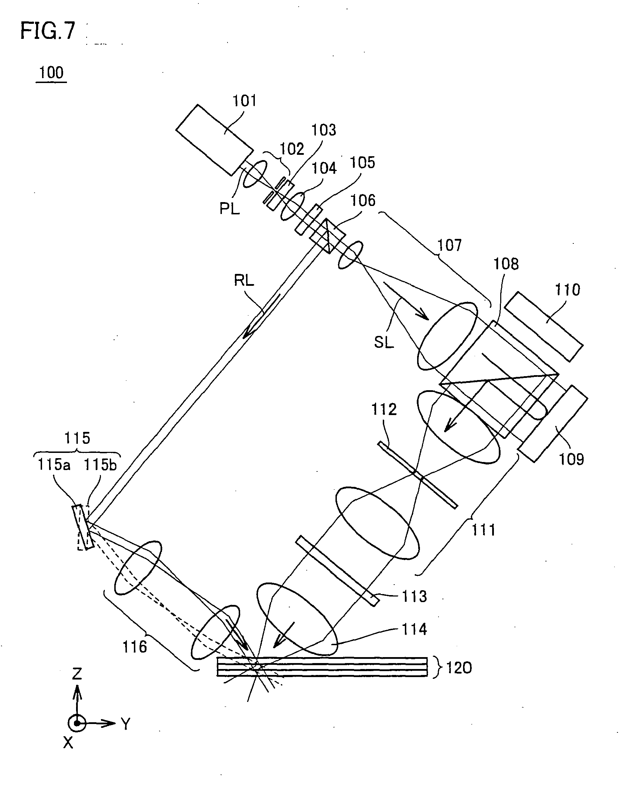

Fig. 7 is a drawing that shows a configuration of a hologram recording/reconstructing apparatus 100 that adopts the conventional angular multiplexing recording scheme, at recording.

With reference to Fig. 7, conventional hologram recording/reconstructing apparatus 100 includes a laser source 101, a spatial filter 102, a shutter 103, a collimate lens 104, a half-wave plates 105, 113, a polarization beam splitter (PBS) 106 for splitting into a signal beam/a reference beam, a beam expander 107, a polarization beam splitter 108 for splitting into record light/a reconstructed beam, a spatial light modulator (SLM) 109, an imaging device 110, relay lenses 111, 116, a polytopic aperture 112, an objective lens 114, and an angularly rotating mirror 115. Hologram recording/reconstructing apparatus 100 causes interference between a signal beam SL and a reference beam RL within a hologram recording medium 120, records interference fringes, and then changes an incident angle of reference beam RL to record holograms in an angular multiplexing scheme.

Next, a recording operation of hologram recording/reconstructing apparatus 100 will be described.

A laser beam PL emitted from laser source 101 is made into a point source by spatial filter 102, then passes through shutter 103, and is converted by collimate lens 104 into a beam having a desired beam diameter. The relevant converted beam is split by polarization beam splitter 106 into signal beam SL and reference beam RL. The split ratio between signal beam SL and reference beam RL is adjusted by rotation of half-wave plate 105.

Reference beam RL is deflected by angularly rotating mirror 115 to pass through relay lens 116 configured with two telecentric lenses, and is applied to hologram recording medium 120 at a set incident angle. The incident angle of reference beam RL relative to hologram recording medium 120 is changed by changing a rotation angle of angularly rotating mirror 115 that rotates about the X axis.

The position where reference beam RL is incident on hologram recording medium 120 does not change even if angularly rotating mirror 115 is rotated, because relay lens 116 is configured with two telecentric lenses. Reference beam RL is incident on hologram recording medium 120 through a path indicated by a solid line when angularly rotating mirror 115 is in the position of a rotating mirror 115a, and is incident on hologram recording medium 120 through a path indicated by a dashed line when angularly rotating mirror 115 is in the position of a rotating mirror 115b. Therefore, as shown in Fig. 7, the position where reference beam RL is incident on hologram recording medium 120 does not change regardless of the paths through which the beam travels.

Signal beam SL has its optical beam diameter adjusted by beam expander 107 such that the whole surface of spatial light modulator 109 is irradiated with the signal beam, and is amplitude-modulated or phase-modulated by spatial light modulator 109. Modulated signal beam SL is reflected by polarization beam splitter 108 to be directed toward hologram recording medium 120. An unnecessary diffracted beam generated at spatial light modulator 109 is blocked by polytopic aperture 112. Signal beam SL reflected by polarization beam splitter 108 passes through relay lens 111 and half-wave plate 113 and is collected by objective lens 114 in hologram recording medium 120. Collected signal beam SL and above-described reference beam RL are superposed within hologram recording medium 120, and light intensity distribution of the resultant interference fringes is recorded as a hologram.

After the information is once recorded in hologram recording medium 120, a data page to be recorded next is displayed at spatial light modulator 109. In addition, angularly rotating mirror 115 rotates slightly to change the incident angle of reference beam RL. After this, shutter 113 is opened so that the data page to be recorded next is recorded in the same recording region of hologram recording medium 120 by angular multiplexing. This operation is repeated, and when a prescribed degree of multiplexing is reached, hologram recording medium 120 is shifted in the X direction or Y direction to perform the above-described multiplex recording in a next recording region.

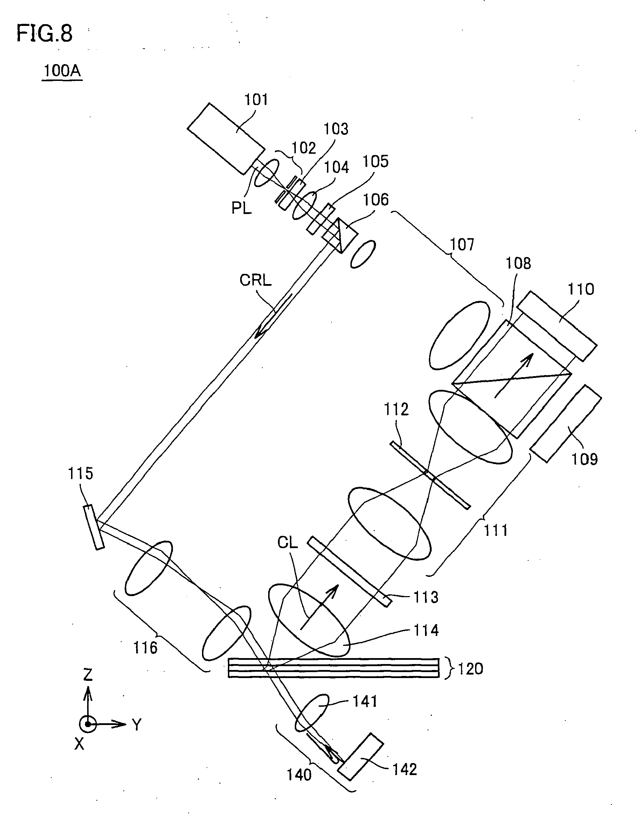

Fig. 8 is a drawing that shows a configuration of a hologram recording/reconstructing apparatus 100A that adopts the conventional angular multiplexing recording scheme, at reconstruction.

A configuration of hologram recording/reconstructing apparatus 100A in Fig. 8 is the same as that of hologram recording/reconstructing apparatus 100 in Fig. 7, except that an optical system 140 for generating a reference beam for reconstruction (hereinafter also referred to as reconstruction reference beam optical system 140) formed of a lens 141 and a fixed reflecting mirror 142 is added. Therefore, the description of the overlapping parts will not be repeated here.

Hologram recording/reconstructing apparatus 100A adopts a so-called phase-conjugate reconstruction scheme, which is advantageous for downsizing of the apparatus. Lens 141 is arranged at a position apart from a region of hologram recording medium 120 where a hologram is recorded, by a focal length. Fixed reflecting mirror 142 is provided to face hologram recording medium 120 with lens 141 interposed therebetween, apart from lens 141 by a focal length.

Next, a reconstructing operation of hologram recording/reconstructing apparatus 100A will be described.

At reconstruction, half-wave plate 105 is rotated such that laser beam PL is S-polarized. S-polarized laser beam PL is entirely reflected by polarization beam splitter 106, and hence only a reference beam CRL for reconstruction (hereinafter also referred to as reconstruction reference beam CRL) is generated. Reconstruction reference beam CRL travels via angularly rotating mirror 115 and relay lens 116, and is transmitted through hologram recording medium 120. Relevant reconstruction reference beam CRL transmitted therethrough is deflected by lens 141, and is vertically incident on fixed reflecting mirror 142. Relevant reconstruction reference beam CRL vertically incident is reflected, follows the same path as the incoming path in a reverse direction, and is incident on hologram recording medium 120.

Hologram recording medium 120 is thus irradiated with reconstruction reference beam CRL, so that a reconstructed beam CL is generated toward objective lens 114. Reconstructed beam CL passes through objective lens 114, relay lens 111, and the like, and forms an image on imaging device 110. Based on relevant reconstructed beam CL that has formed an image, reconstructed image data is generated. Next, angularly rotating mirror 115 is rotated to change an incident angle of reconstruction reference beam CRL relative to hologram recording medium 120. By doing so, reconstructed beam CL corresponding to another data page is generated from the same region of hologram recording medium 120, and the next reconstructed image data is generated by imaging device 110.

In the above-described reconstructing operation, reconstruction reference beam CRL is also applied to an adjacent hologram. Therefore, reconstructed beam CL is also generated from this adjacent hologram. Reconstructed beam CL from the adjacent hologram, however, can be blocked by polytopic aperture 112 described above. Thus, with hologram recording/reconstructing apparatus 100A in Fig. 8, the reconstructing operation with less crosstalk can be achieved even if a recording pitch in any in-plane direction (the X direction and the Y direction) of hologram recording medium 120 is narrowed.

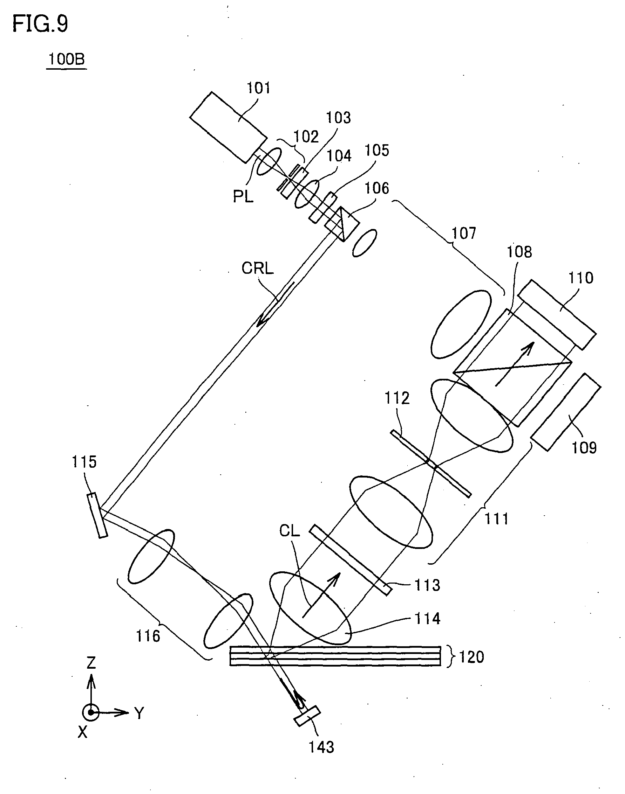

Fig. 9 is a drawing that shows a configuration of a hologram recording/reconstructing apparatus 100B that adopts the conventional angular multiplexing recording scheme, at reconstruction.

A configuration of hologram recording/reconstructing apparatus 100B in Fig. 9 is the same as that of hologram recording/reconstructing apparatus 100A in Fig. 8, except that reconstruction reference beam optical system 140 is replaced by an angularly rotating mirror 143. Therefore, the description of the overlapping parts will not be repeated here. Hologram recording/reconstructing apparatus 100B also adopts the so-called phase-conjugate reconstruction scheme.

Next, a reconstructing operation of hologram recording/reconstructing apparatus 100B will be described.

Reference is made to Fig. 9. After reconstruction reference beam CRL once passes through hologram recording medium 120, it is reflected by angularly rotating mirror 143. Angularly rotating mirror 143 is set at an angle at which reconstruction reference beam CRL is vertically incident thereon. Therefore, reconstruction reference beam CRL follows the same path as the incoming path in a reverse direction to be incident on hologram recording medium 120. Reconstructed beam CL is thereby generated as described above, and reconstructed beam CL is directed to imaging device 110 so that reconstructed image data can be obtained.

Next, angularly rotating mirrors 115, 143 are rotated to change the incident angle of reconstruction reference beam CRL relative to hologram recording medium 120. By doing so, reconstructed beam CL corresponding to another data page is generated from the same recording region of hologram recording medium 120, and the next reconstructed image data is obtained by imaging device 110.

In hologram recording/reconstructing apparatus 100A in Fig. 8, it is necessary to arrange lens 141 at a position apart from hologram recording medium 120 by a focal length, and furthermore, precisely arrange fixed reflecting mirror 142 at a position apart from lens 141 by a focal length. Therefore, adjustment of the optical system is difficult. Additionally, long-term service may collapse the positional relationship of reconstruction reference beam optical system 140, and hence there are some concerns about durability. Further, in hologram recording/reconstructing apparatus 100B shown in Fig. 9, there arises a problem in which rotation angles of angularly rotating mirrors 115, 143 must be controlled in a coordinated manner.

SUMMARY OF THE INVENTION

An object of the present invention is to provide a hologram element, a hologram element fabricating apparatus, a hologram element fabricating method, and a hologram reconstructing apparatus, which enable easy adjustment of a reconstruction reference beam optical system.

According to an aspect of the present invention, the present invention is a hologram element for deflecting incident optical beams, including holograms which receive the optical beams passing through a base point located outside the hologram element and incident on the hologram element. The holograms emit the optical beams as diffracted beams which travel in a reverse direction relative to an incident direction, such that the optical beams pass through the base point.

Preferably, each of the optical beams is a parallel beam, and each of the diffracted beams is a parallel beam.

Preferably, the holograms are recorded in a multiplexing manner.

Preferably, the holograms are recorded in a multiplexing manner by changing an incident angle of the optical beams with respect to the hologram element, and emit the diffracted beams at constant diffraction efficiency regardless of the incident angle of the optical beams.

According to another aspect of the present invention, the present invention is a hologram element fabricating apparatus which fabricates a hologram element for deflecting incident optical beams, including: a deflection unit which adjusts an angle and a position at which a fabrication reference beam for fabricating the hologram element is incident on the hologram element; and a reflection unit which moves along an arc in accordance with the deflection unit, vertically receives the fabrication reference beam transmitted through the hologram element, and reflects the received fabrication reference beam, as a fabrication signal beam for fabricating the hologram element, toward an incident position of the fabrication reference beam on the hologram element.

Preferably, multiplex recording is performed by adjusting an angle of the deflection unit, and causing interference between the fabrication reference beam and the fabrication signal beam at a prescribed position of the hologram element.

According to still another aspect of the present invention, the present invention is a hologram element fabricating method for fabricating a hologram element for deflecting incident optical beams, including the steps of: adjusting an angle and a position at which a fabrication reference beam for fabricating the hologram element is incident on the hologram element; vertically reflecting the fabrication reference beam transmitted through the hologram element, as a fabrication signal beam for fabricating the hologram element, toward an incident position of the fabrication reference beam on the hologram element; and performing multiplex recording by causing interference between the fabrication reference beam and the fabrication signal beam at a prescribed position of the hologram element.

According to a further aspect of the present invention, the present invention is a hologram reconstructing apparatus which reconstructs information from a hologram recording medium, including: a deflection unit which adjusts an angle and a position at which a reconstruction reference beam is incident on the hologram recording medium; and a hologram element which reflects the reconstruction reference beam transmitted through the hologram recording medium, as a diffracted beam, in a reverse direction relative to a traveling direction regardless of the incident angle.

Preferably, the hologram element includes holograms which receive optical beams passing through a base point located outside the hologram element and incident on the hologram element. The holograms emit the optical beams as diffracted beams which travel in a reverse direction relative to an incident direction, such that the optical beams pass through the base point.

According to the present invention, the reconstruction reference beam optical system can easily be adjusted.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a drawing that shows a configuration of a hologram recording/reconstructing apparatus 10 according to an embodiment of the present invention.
Fig. 2 is a partially-enlarged view for describing a recording operation of hologram recording/reconstructing apparatus 10 in Fig. 1.
Fig. 3 is a partially-enlarged view for describing a reconstructing operation of hologram recording/reconstructing apparatus 10 in Fig. 1.
Fig. 4 is a drawing that shows a configuration of a hologram element fabricating apparatus 90 according to an embodiment of the present invention.
Fig. 5 is a schematic view for describing how to fabricate a hologram element 40 described in Fig. 4.
Fig. 6 is a schematic view for describing an operating principle of hologram element 40 fabricated in Fig. 5.
Fig. 7 is a drawing that shows a configuration of hologram recording/reconstructing apparatus 100 that adopts the conventional angular multiplexing recording scheme, at recording.
Fig. 8 is a drawing that shows a configuration of hologram recording/reconstructing apparatus 100A that adopts the conventional angular multiplexing recording scheme, at reconstruction.

Fig. 9 is a drawing that shows a configuration of hologram recording/reconstructing apparatus 100B that adopts the conventional angular multiplexing recording scheme, at reconstruction.

DESCRIPTION OF THE PREFERRED EMBODIMENTS

Embodiments of the present invention will hereinafter be described in detail with reference to the drawings. Note that the same or corresponding portions in the drawings are provided with the same reference characters, and the description thereof will not be repeated.

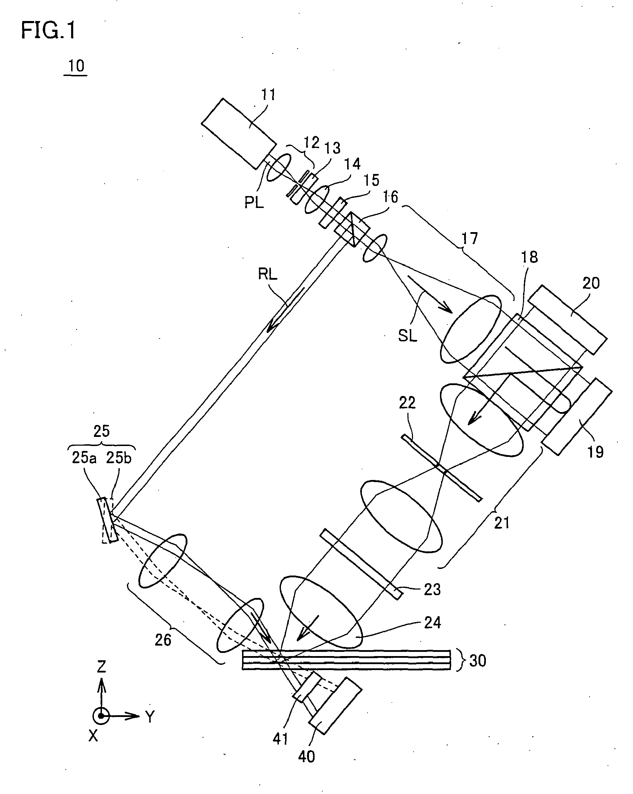

Fig. 1 is a drawing that shows a configuration of a hologram recording/reconstructing apparatus 10 according to an embodiment of the present invention.

With reference to Fig. 1, hologram recording/reconstructing apparatus 10 according to the embodiment of the present invention includes a laser source 11, a spatial filter 12, a shutter 13, a collimate lens 14, half-wave plates 15, 23, a polarization beam splitter (PBS) 16 for splitting into a signal beam/a reference beam, a beam expander 17, a polarization beam splitter 18 for splitting into record light/a reconstructed beam, a spatial light modulator (SLM) 19, an imaging device 20, relay lenses 21, 26, a polytopic aperture 22, an objective lens 24, an angularly rotating mirror 25, a hologram element 40, and a quarter wave plate 41.

Polytopic aperture 22 is shown as an example, and another aperture may be used. Hologram recording/reconstructing apparatus 10 causes interference between signal beam SL and reference beam RL within a hologram recording medium 30, records interference fringes, and then changes an incident angle of reference beam RL to record holograms in an angular multiplexing scheme.

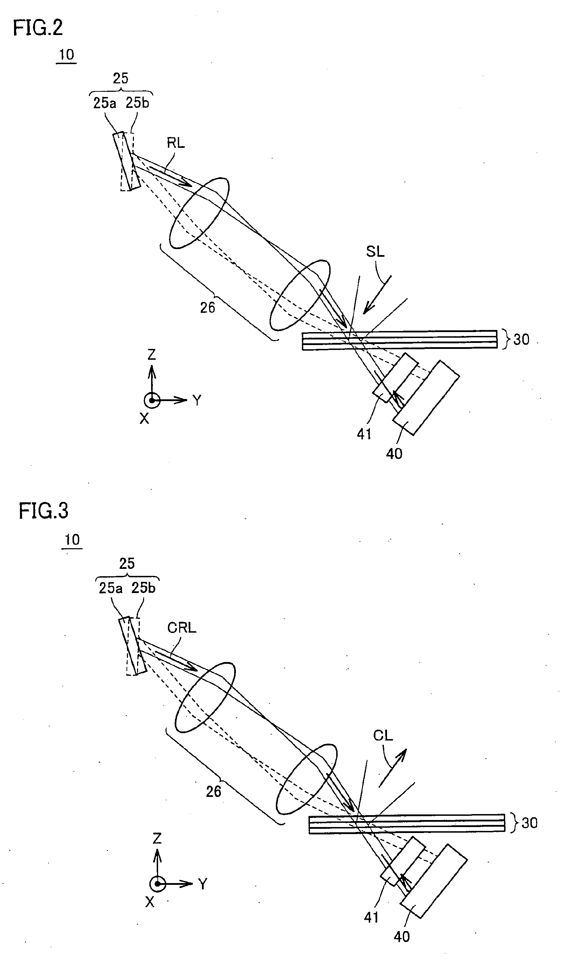

Fig. 2 is a partially-enlarged view for describing a recording operation of hologram recording/reconstructing apparatus 10 in Fig. 1.

In Fig. 2, to simplify the description, a portion of hologram recording/reconstructing apparatus 10 in Fig. 1, where reference beam RL is incident on hologram recording medium 30, is shown in an enlarged manner. Note that a recording operation of other optical elements not shown in Fig. 2 is the same as that of conventional hologram recording/reconstructing apparatus 100 described above, and hence the description thereof will not be repeated.

At recording, signal beam SL is applied to hologram recording medium 30 as in conventional hologram recording/reconstructing apparatus 100 described above. In contrast, reference beam RL is deflected by angularly rotating mirror 25, passes through relay lens 26, and is applied to hologram recording medium 30 at a set incident angle. Relevant applied reference beam RL and signal beam SL are superposed within hologram recording medium 30, and light intensity distribution of resultant interference fringes is recorded as a hologram. Note that the incident angle of reference beam RL relative to hologram recording medium 30 is changed by changing a rotation angle of angularly rotating mirror 25 that rotates about the X axis.

Note that reference beam RL incident on hologram recording medium 30 is partially transmitted through hologram recording medium 30. This transmitted reference beam RL passes through quarter wave plate 41 to be incident on hologram element 40. This incident reference beam RL has its traveling direction changed by hologram element 40 into a reverse direction, regardless of the incident angle, follows the same optical path as the incoming path, and is again applied to hologram recording medium 30.

At this time, reference beam RL passes through quarter wave plate 41 twice, so that its polarized direction is changed from a P-polarized direction to an S-polarized direction. Signal beam SL is S-polarized, and hence no interference occurs between reference beam RL that has returned from hologram element 40 and signal beam SL. Therefore, no influence is exerted on recording of a hologram. Note that a shutter may be used instead of quarter wave plate 41. In this case, the shutter may be closed at recording, while opened at reconstruction.

Fig. 3 is a partially-enlarged view for describing a reconstructing operation of hologram recording/reconstructing apparatus 10 in Fig. 1.

As in Fig. 2, Fig. 3 shows in an enlarged manner a portion of hologram recording/reconstructing apparatus 10 in Fig. 1, where reconstruction reference beam CRL is incident on hologram recording medium 30. Note that a reconstructing operation of other optical elements not shown in Fig. 3 is the same as that of conventional hologram recording/reconstructing apparatuses 100A, 100B described above, and hence the description thereof will not be repeated.

At reconstruction, reconstruction reference beam CRL is applied to hologram recording medium 30 as in conventional hologram recording/reconstructing apparatuses 100A, 100B described above. A part of reconstruction reference beam CRL is diffracted by the recorded hologram along a traveling direction of signal beam SL, as direct reconstructed beam CL, while the other part thereof is transmitted through hologram recording medium 30. Relevant transmitted reconstruction reference beam CRL passes through quarter wave plate 41 and is incident on hologram element 40.

This incident reconstruction reference beam CRL has its traveling direction changed by hologram element 40 into a reverse direction, regardless of its incident angle, follows the same optical path as the incoming path, and is applied again to hologram recording medium 30. Consequently, reconstructed beam CL is generated by the recorded hologram, and directed to imaging device 110 by following the same optical path as that of signal beam SL at recording, so that reconstructed image data is obtained. Note that hologram recording/reconstructing apparatus 10 may also be configured with a hologram recording apparatus and a hologram reconstructing apparatus in a separate manner.

For a material of hologram element 40, a material that can record interference fringes of a beam, namely, a hologram, may be used. Specific examples thereof are a photosensitive polymer material, and others. Fabrication and an operating principle of hologram element 40 will later be described in detail.

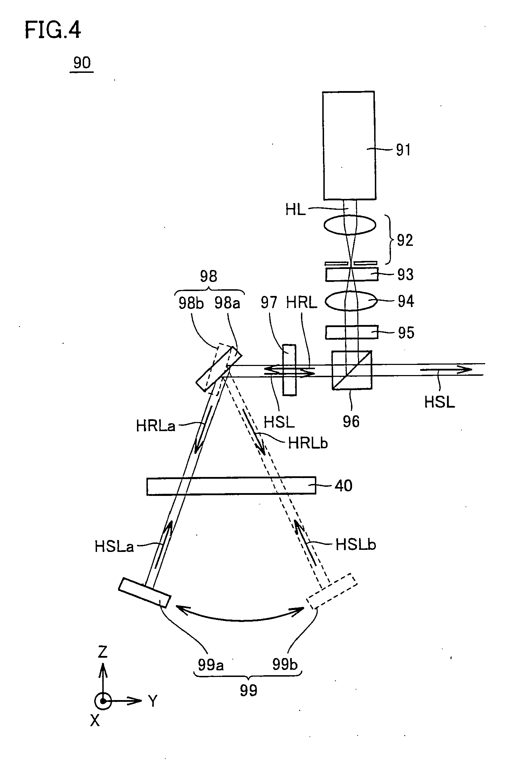

Fig. 4 is a drawing that shows a configuration of a hologram element fabricating apparatus 90 according to an embodiment of the present invention.

With reference to Fig. 4, hologram element fabricating apparatus 90 according to the embodiment of the present invention includes a laser source 91, a spatial filter 92, a shutter 93, a collimate lens 94, a half-wave plate 95, a polarization beam splitter (PBS) 96, a quarter wave plate 97, an angularly rotating mirror 98, and a reflecting mirror 99. Hologram element fabricating apparatus 90 fabricates hologram element 40 by recording holograms on a material of hologram element 40 by multiplex recording.

An laser beam HL emitted from laser source 91 is made into a point source by spatial filter 92, then passes through shutter 93, and is converted by collimate lens 94 into a beam having a desired beam diameter. The relevant converted beam passes through half-wave plate 95 to be reflected by polarization beam splitter 96. At this time, an amount of light reflected by polarization beam splitter 96 can be adjusted by rotation of half-wave plate 95.

The optical beam reflected by polarization beam splitter 96 passes through quarter wave plate 97 to be converted from a P-polarized beam into a circularly-polarized beam, and is then reflected by angularly rotating mirror 98. The relevant reflected beam is incident on hologram element 40 at a desired angle, as a reference beam HRL for fabrication (hereinafter also referred to as fabrication reference beam HRL) for fabricating a hologram element. An incident angle and an incident position at which fabrication reference beam HRL is incident on hologram element 40 can be changed by rotating angularly rotating mirror 98, as indicated by angularly rotating mirrors 98a, 98b.

Fabrication reference beam HRL transmitted through hologram element 40 is vertically incident on reflecting mirror 99 and reflected to follow the same optical path as that of fabrication reference beam HRL in an opposite direction. The relevant reflected beam, which serves as a signal beam HSL for fabrication (hereinafter also referred to as fabrication signal beam HSL) for fabricating a hologram element, interferes with fabrication reference beam HRL within hologram element 40, and is then reflected by angularly rotating mirror 98. Relevant reflected fabrication signal beam HSL passes through quarter wave plate 97 to thereby turns into an S-polarized beam, is transmitted through polarization beam splitter 96, and diverts from the optical path of hologram element fabricating apparatus 96.

An angle and a position of reflecting mirror 99 are changed to adapt an incident angle and an incident position of fabrication reference beam HRL transmitted through hologram element 40. The angle and position of reflecting mirror 99 are determined by the angle of angularly rotating mirror 98, and hence it is preferable to provide a mechanism that moves reflecting mirror 99 and angularly rotating mirror 98 in a synchronous manner. Reflecting mirror 99 is moved along an arc that has its center located at angularly rotating mirror 98, in accordance with an angle of angularly rotating mirror 98, as indicated by reflecting mirrors 99a, 99b.

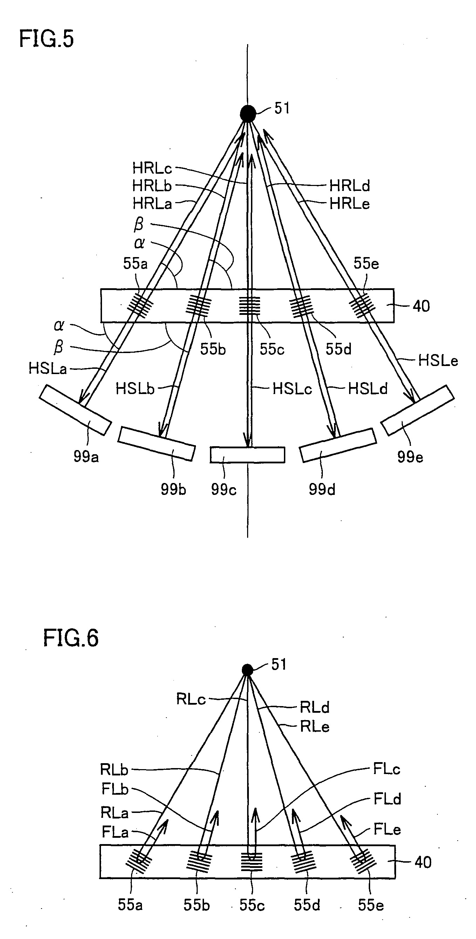

Fig. 5 is a schematic view for describing how to fabricate hologram element 40 described in Fig. 4.

In Fig. 5, for the sake of simplicity, angularly rotating mirror 98 in Fig. 4 is shown as a base point 51. Further, each of the optical beams indicated by an arrow in Fig. 5 is a parallel beam, and permanently maintains its optical beam diameter, without converging or dispersing. This is consistent with the fact in Fig. 4 that collimated fabrication reference beam HRL is deflected by angularly rotating mirror 98 to be incident on hologram element 40.

In the following, a fabrication reference beam HRLa that passes through base point 51 to be incident on hologram element 40 at an angle $\alpha$ and a fabrication signal beam HSLa will be described as an example.

Fabrication reference beam HRLa for fabricating a hologram element passes through base point 51 to be transmitted through hologram element 40, and is then vertically incident on a reflecting mirror 99a. Relevant incident fabrication reference beam HRLa is reflected in a direction opposite to the incident direction, travels along the same optical path, as fabrication signal beam HSLa for fabricating a hologram element, and is applied to a back surface of hologram element 40 at angle $\alpha$. At this time, fabrication reference beam HRLa and fabrication signal beam HSLa interfere with each other, and intensity distribution of the resultant interference fringes is recorded as a hologram 55a on hologram element 40. Fabrication signal beam HSLa passes through base point 51.

Further, interference fringes of a fabrication reference beam HRLb incident on hologram element 40 at an angle $\beta$ and a fabrication signal beam HSLb reflected by a reflecting mirror 99b are recorded as a hologram 55b on hologram element 40 in a multiplexing manner. Similarly, holograms 55c-55e are recorded on hologram element 40 in a multiplexing manner. Note that provision of five holograms 55a-55e is an example, and any number of holograms may be recorded.

When holograms are recorded on hologram element 40 in a multiplexing manner, hologram element 40 is fixed, and an incident angle of fabrication reference beam HRL and a position of reflecting mirror 99 are changed whenever a record is made, as shown in Fig. 4. It is thereby possible to record holograms at desired positions on hologram element 40 in a multiplexing manner. Alternatively, holograms may be recorded in a multiplexing manner by fixing the traveling direction of fabrication reference beam HRL and the position of reflecting mirror 53, and changing the position and the angle at which hologram element 40 is provided with respect to base point 51.

The multiplex recording described above means that holograms are recorded in a superposed manner in the same region of hologram element 40. Multiplex recording has advantages that a difference between angle α and angle β can be made smaller so that the number of angles adaptable for recording can be increased.

An upper limit of the number of holograms that can be recorded in a multiplexing manner in a certain region is determined by an M number of hologram element 40 and diffraction efficiency of each of the holograms. The M number refers to a maximum number of holograms that have diffraction efficiency of 100% and can be recorded at the same site. A maximum number H of holograms that have diffraction efficiency of η% and can be recorded in a multiplexing manner at one site of a hologram element that has an M number of m, can be expressed by the following expression.

$$H = m / \sqrt{(\eta / 100)}$$

For example, when holograms are recorded in a multiplexing manner such that each of the holograms has diffraction efficiency of 100%, on a hologram element that has an M number of 10, a maximum number of holograms that can be recorded in a multiplexing manner in a certain region is 10. If this hologram element is used for hologram recording/reconstructing apparatus 10, holograms to be recorded preferably have diffraction efficiency of at least 50%, and more preferably at least 90%. Note that diffraction efficiency of holograms to be recorded can be adjusted by an exposure amount of each of fabrication reference beam HRL and fabrication signal beam HSL applied at recording.

When hologram element 40 is fabricated with the use of the above-described fabricating method, the number of holograms recorded in a multiplexing manner in a certain region is determined by a size of each hologram, which is determined by an optical beam diameter of each of fabrication reference beam HRL and fabrication signal beam HSL, a pitch of an incident angle of fabrication reference beam HRL at multiplex recording, and a distance from base point 51 to hologram element 40.

Therefore, to record a large number of holograms in a multiplexing manner at multiplex recording of holograms onto hologram element 40, it is desirable to adjust an optical beam diameter of each of fabrication reference beam HRL and fabrication signal beam HSL, a pitch of the incident angle of fabrication reference beam HRL, and a distance from base point 51 to hologram element 40, in accordance with an M number of hologram element 40 and required diffraction efficiency.

If specifications required for hologram recording/reconstructing apparatus 10 that uses hologram element 40, such as the above-described optical beam diameter and pitch of an incident angle, are determined, it is necessary to consider them in fabricating hologram element 40 and select an M number of hologram element 40 to be used and a distance from base point 51 to hologram element 40.

When multiplex recording is always performed at a constant exposure amount in fabricating hologram element 40, generated holograms differ in size depending on an incident angle of fabrication reference beam HRL and fabrication signal beam HSL with respect to hologram element 40. Therefore, at reconstruction, diffraction efficiency inevitably varies depending on an angle at which reconstruction reference beam CRL is applied to hologram element 40. To avoid the problem, it is preferable to adjust an exposure amount at multiplex recording.

As shown in Fig. 5, on hologram element 40 fabricated as such, holograms 55a-55e are recorded in a superposed manner on an arc that has its center located at base point 51. In each of the holograms, interference fringes are formed in a tangential direction of the arc.

Fig. 6 is a schematic view for describing an operating principle of hologram element 40 fabricated in Fig. 5.

Hologram element 40 where interference fringes are recorded in a multiplexing manner as described above, is irradiated with a reference beam RLa that passes through base point 51, as in the case where hologram element 40 is fabricated, namely, as shown in Fig. 6. Owing to a principle of a hologram, a diffracted beam FLa that follows the same optical path as that of fabrication signal beam HSLa in Fig. 5 is generated from hologram 55a, which is recorded as interference fringes. As described in Fig. 5, each of the optical beams indicated by an arrow in Fig. 6 is a parallel beam, and permanently maintains its optical beam diameter without converging or dispersing.

Further, when a reference beam RLb is applied, a diffracted beam FLb that follows the same optical path as that of fabrication signal beam HSLb in Fig. 5 is generated. Similarly, diffracted beams FLc-FLe are generated. Diffracted beams FLa-FLe generated as such pass through base point 51, even if reference beams RLa-RLe are incident on hologram element 40 at any angle.

As described above, hologram element 40 generates a diffracted beam FL that has a traveling direction opposite to that of incident reference beam RL, regardless of its incident angle. Therefore, even if an incident angle of incident reference beam RL changes, it is possible to generate diffracted beam FL that has a traveling direction opposite to that of incident reference beam RL, without changing an angle at which hologram element 40 is provided, and others, as in the conventional reflecting mirror.

Further, when hologram element 40 is to be fabricated, by adjusting an exposure amount whenever a record is made at multiplex recording, it is also possible to generate a diffracted beam at constant diffraction efficiency for reference beam RL incident at any angle.

As described above, according to the embodiments of the present invention, it is possible to generate diffracted beam FL that has a traveling direction opposite to that of incident reference beam RL, by fabricating hologram element 40 and providing the same at a position of the reconstruction reference beam optical system of hologram recording/reconstructing apparatus 10, without adjusting a position and an angle of the reconstruction reference beam optical system, as in the conventional reflecting mirror. It is thereby possible to construct the hologram recording/reconstructing apparatus that has a small size and enables easy adjustment of the optical system.

Although the present invention has been described and illustrated in detail, it is clearly understood that the same is by way of illustration and example only and is not to be taken by way of limitation, the scope of the present invention being interpreted by the terms of the appended claims.

**Claims**

1. A hologram element (40) for deflecting incident optical beams, comprising holograms (55a-55e) which receive the optical beams passing through a base point (51) located outside said hologram element and incident on said hologram element, said holograms (55a-55e) emitting said optical beams as diffracted beams which travel in a reverse direction relative to an incident direction, such that said optical beams pass through said base point (51).

2. The hologram element according to claim 1, wherein each of said optical beams is a parallel beam, and each of said diffracted beams is a parallel beam.

3. The hologram element according to claim 1, wherein said holograms (55a-55e) are recorded in a multiplexing manner.

4. The hologram element according to claim 1, wherein said holograms (55a-55e) are recorded in a multiplexing manner by changing an incident angle of said optical beams with respect to said hologram element (40), and emit said diffracted beams at constant diffraction efficiency regardless of the incident angle of said optical beams.

5. A hologram element fabricating apparatus (90) which fabricates a hologram element (40) for deflecting incident optical beams, comprising:

    a deflection unit (98) which adjusts an angle and a position at which a fabrication reference beam for fabricating said hologram element is incident on said hologram element; and
    a reflection unit (99) which moves along an arc in accordance with said deflection unit, vertically receives said fabrication reference beam transmitted through said hologram element, and reflects said received fabrication reference beam, as a fabrication signal beam for fabricating said hologram element, toward an incident position of said fabrication reference beam on said hologram element.

6. The hologram element fabricating apparatus according to claim 5, wherein multiplex recording is performed by adjusting an angle of said deflection unit (98), and causing interference between said fabrication reference beam and said fabrication signal beam at a prescribed position of said hologram element (40).

7. A hologram element fabricating method (90) for fabricating a hologram element (40) for deflecting incident optical beams, comprising the steps of:

    adjusting (98) an angle and a position at which a fabrication reference beam for fabricating said hologram element is incident on said hologram element;
    vertically reflecting (99) said fabrication reference beam transmitted through said hologram element, as a fabrication signal beam for fabricating said hologram element, toward an incident position of said fabrication reference beam on said hologram element; and
    performing multiplex recording by causing interference between said fabrication reference beam and said fabrication signal beam at a prescribed position of said hologram element.

8. A hologram reconstructing apparatus (10) which reconstructs information from a hologram recording medium, comprising:

    a deflection unit (25) which adjusts an angle and a position at which a reconstruction reference beam is incident on said hologram recording medium; and
    a hologram element (40) which reflects the reconstruction reference beam transmitted through said hologram recording medium, as a diffracted beam, in a reverse direction relative to a traveling direction regardless of the incident angle.

**EP 2 015 295 A1**

9. The hologram reconstructing apparatus according to claim 8, wherein said hologram element (40) includes holograms (55a-55e) which receive optical beams passing through a base point (51) located outside said hologram element and incident on said hologram element, and
said holograms (55a-55e) emit said optical beams as diffracted beams which travel in a reverse direction relative to an incident direction, such that said optical beams pass through said base point (51).

FIG.1

FIG.2

FIG.3

# FIG.4

<u>90</u>

FIG.5

51

HRLc
HRLb
HRLa
HRLd
HRLe

β
α

55a
55e

40

α
β

HSLa

55b 55c 55d

HSLb HSLc HSLd

HSLe

99a

99b 99c 99d

99e

FIG.6

51

RLc
RLd
RLe

RLb
FLb
RLa
FLa

FLc
FLd
FLe

40

55a 55b 55c 55d 55e

13

FIG.7

FIG.8

100A

FIG.9

100B

**European Patent Office**

**EUROPEAN SEARCH REPORT**

Application Number

EP 08 01 2425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2002/196486 A1 (INGWALL RICHARD T [US] ET AL) 26 December 2002 (2002-12-26) * the whole document * ----- | 1-9 | INV. G11B7/0065 G11B7/135 |
| A | WO 83/04317 A (HUGHES AIRCRAFT CO [US]) 8 December 1983 (1983-12-08) * page 8, line 30 - page 9, line 23; figure 5 * ----- | 1-9 | |
| A | EP 1 544 854 A (DAEWOO ELECTRONICS CORP [KR]) 22 June 2005 (2005-06-22) * the whole document * ----- | 1-9 | |

TECHNICAL FIELDS SEARCHED (IPC)

G11B
G02B

The present search report has been drawn up for all claims

| Place of search | Date of completion of the search | Examiner |
|---|---|---|
| The Hague | 29 September 2008 | Pacholec, Darek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 01 2425

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2008

| Patent document cited in search report | Publication date | Patent family member(s) | Publication date |
|---|---|---|---|
| US 2002196486 A1 | 26-12-2002 | US 2006092489 A1 | 04-05-2006 |
| WO 8304317 A | 08-12-1983 | DE 3374606 D1<br>EP 0110963 A1<br>IL 68803 A<br>IT 1172266 B<br>US 4637678 A | 23-12-1987<br>20-06-1984<br>31-10-1986<br>18-06-1987<br>20-01-1987 |
| EP 1544854 A | 22-06-2005 | CN 1629949 A<br>JP 2005182975 A<br>KR 20050059448 A<br>US 2005128541 A1 | 22-06-2005<br>07-07-2005<br>21-06-2005<br>16-06-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007180470 A

- JP 2006317886 A

**Non-patent literature cited in the description**

- **IAN REDMOND.** The InPhase Professional Archive Drive OMA: Design and Function. *Optical Data Storage Topical Meeting 2006,* 2006